# EUROPEAN PATENT SPECIFICATION

(11) **EP 3 960 368 B1**
(45) Date of publication and mention of the grant of the patent: **08.05.2024**
(21) Application number: 20382776.1
(22) Date of filing: 01.09.2020
(51) Int. Cl.: B23Q 17/22, B23Q 17/24, G05B 19/401

(54) **METHOD FOR CALIBRATING THE GEOMETRIC ERRORS OF A MACHINE TOOL**
VERFAHREN ZUR KALIBRIERUNG DER GEOMETRISCHEN FEHLER EINER WERKZEUGMASCHINE
PROCÉDÉ D'ÉTALONNAGE DES ERREURS GÉOMÉTRIQUES D'UNE MACHINE-OUTIL

(43) Date of publication of application: 02.03.2022
(73) Proprietor: Ideko, S.Coop., 20870 Elgoibar Guipuzcoa (ES)
(72) Inventor: URRETA PRIETO, HARKAITZ, 20870 ELGOIBAR (GIPUZKOA) (ES); AGUIRRE REJADO, GORKA, 20870 ELGOIBAR (GIPUZKOA) (ES); LEIZEA ALONSO, IBAI, 20870 ELGOIBAR (GIPUZKOA) (ES); MENDICUTE GARATE, ALBERTO, 20870 ELGOIBAR (GIPUZKOA) (ES); IÑIGO IBABE, BEÑAT, 20870 ELGOIBAR (GIPUZKOA) (ES)
(74) Representative: Plasseraud IP

(56) References cited:
- EP-B1- 3 101 384
- US-A1- 2010 103 431
- US-A1- 2010 302 366

## Description

### Technical field

The present invention proposes a method for calibrating the geometric errors of the drive axes of a machine tool in order to improve the precision in the positioning of the axes within the work volume of the machine.

### State of the art

The calibration of machine tools is a necessary process for the optimisation of production processes in industries. Currently the industry demands the manufacture of parts with the highest added value, which requires machines that have a practically negligible geometric error.

The geometric error of the drive axes of a machine tool is the main cause of precision errors in the positioning of the machine, and is essentially due, among other factors, to the misalignment of the measuring means of the axes (rules, encoders,...), to the type of machine, the loads it withstands, as well as the manufacturing and assembly defects thereof.

At present, a technique for calibrating the drive axes of a machine tool is based on the use of a calibration tool with reference patterns and a position gauge with which the spatial positions of the reference patterns measured in machine coordinates are determined.

The reference patterns of the calibration tool are a series of geometric shapes, generally spheres, although they can also be other shapes (cylinders, cones, vertices, etc.). The relative position of the reference patterns is calibrated in a metrology machine with a higher order of precision with respect to that expected to be measured in the machine tool. In this way, the relative position of the reference patterns on the calibration tool is perfectly known, so it is used to accurately calibrate the drive axes of the machine tool.

In order to carry out the calibration, the position gauge is arranged on the head of the machine tool, and the calibration tool is arranged in the work volume of the machine, generally on the work bench of the machine wherein the workpiece is arranged during machining operations. With this arrangement, the head travels over the reference patterns while the gauge is referencing the spatial position of each one of the reference patterns in machine coordinates, in order to be able to calibrate the drive axes of the machine tool with this information.

One of the main problems in the implementation of this calibration technique is that the approximate location of the calibration tool within the work volume of the machine is unknown a priori, so the measurement requires the performance of machine movements with manual control by the operator to bring the head closer to the calibration tool and that the position gauge is able to precisely measure each of the reference patterns and thus be able to calibrate the drive axes of the machine. This entails that the calibration process of the machine is slow, which limits the industrial interest thereof, as sometimes the improvement in the precision in the positioning that the calibration grants does not compensate for the loss of time in the calibration.

For example, document EP3101384B1, from the same applicant as the present invention, describes a method for calibrating the drive axes of a machine tool which uses a head with a gauge and a calibration tool with reference patterns in the form of spheres, the calibration tool being available in the work volume of the machine tool. This document has the drawback of the loss of time associated with moving the head with the gauge to the reference patterns of the calibration tool.

Another example of calibration method and calibration device can be found in US 2010/302366 A1. Additionally, US 2010/103431 A1 describes an apparatus and method for determining a position of a robot.

### Object of the invention

According to the present invention, an improved method is proposed for calibrating the geometric errors in the positioning of a machine tool with a reduction of the total calibration time, said geometric errors being linked to the movement of the drive axes of the machine.

The method is defined in claim 1.

In this way, the movement of the head with the gauge to the reference patterns of the calibration tool is automatically performed, using to that end the information of the reference markers obtained by means of the vision means. Thus, the invention proposes the use of photogrammetric techniques to determine the approximate spatial position of the calibration tool within the work volume of the machine, which considerably reduces the calibration time, not requiring the performance of machine movements with manual control on the part of the operator to bring the head closer to the calibration tool, as proposed by the aforementioned solutions of the state of the art.

Preferably, to improve the precision in determining the spatial position of the reference markers, more than one image of the work volume of the machine may be captured, wherein each image is captured from a different orientation.

In order to capture more than one image from different orientations, two options have been provided. According to a first option, the vision means may be a movable camera which captures several images of the work volume of the machine from different orientations. According to a second option, the vision means may be more than one fixed camera, and each fixed camera captures an image of the work volume of the machine from a fixed and different orientation.

According to the claimed embodiment, before moving the head to the tool, the relative position between the first reference markers and the reference patterns is determined, and the relative position between the second reference markers and the position gauge is further determined. In this way, the control unit of the machine tool knows the approximate spatial position of the reference patterns to be able to command the drive axes and move the gauge to the reference patterns, so that the gauge can establish the actual spatial position of the patterns.

Preferably, the calibration tool used may comprise a bar on which the reference patterns are arranged, said bar having a vertical rotation axis. In this way, after determining the actual spatial positions of the reference patterns by means of the position gauge, the bar may be rotated according to a controlled rotation about the vertical rotation axis, leaving the bar arranged in a new orientation, and then new approximate and actual spatial positions of the reference patterns are determined again according to the new orientation. In this way, the correction of geometric errors of the machine is improved by having information about the reference patterns in different orientations within the work volume of the machine.

In accordance with all this, an improved method is obtained for correcting the geometric errors of the drive axes of a machine tool, wherein the use of photogrammetry techniques enables the total time of calibration of the machine to be considerably reduced, and therefore achieving that the improved positioning precision compensates for the time spent on calibration.

### Description of the figures

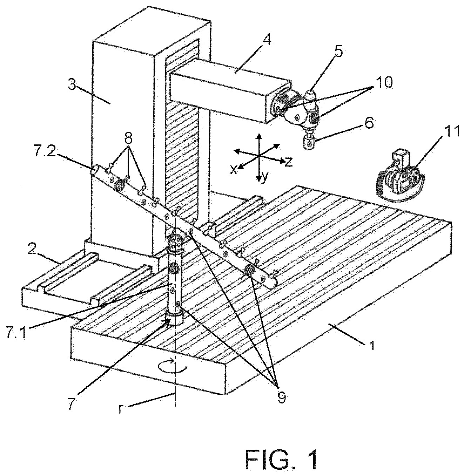

Figure 1 shows an example of a machine tool which can be calibrated using the method of the invention, and wherein a head with a position gauge which has first reference markers, a calibration tool with reference patterns which has second reference markers, and vision means for viewing the markers arranged in the head and in the calibration tool are shown.

### Detailed description of the invention

Figure 1 shows an exemplary embodiment of a machine tool with drive axes, the geometric error of which can be minimised by using the calibration method of the invention, such that the precision in the positioning of the machine is improved.

The example of the machine tool represented in Figure 1 is a moving column milling machine; however, the configuration and type of machine tool is not limiting, the calibration method being applicable to any machine tool that has drive axes for the positioning of different movable parts of the machine, such as milling machines, boring machines, lathes, grinding machines, etc.

The machine tool of Figure 1 comprises a work bench (1), a frame (2) on which a column (3) is arranged which is movable with respect to the frame (2), a ram (4) that is arranged in the column (3) and which is movable with respect to the column (3), and a head (5) which is arranged at a free end of the ram (4).

The machine tool is provided with at least three linear drive axes represented in the figure by the "x, y, z" axes. By means of these drive axes, the column (3) moves horizontally on the frame (2) on the "x" axis, and the ram (4) moves vertically with respect to the column (3) on the "y" axis, and horizontally on the "z" axis. By interpolating the movement of the drive axes, the head (5) can be arranged in different spatial positions within the work volume of the machine tool.

The machine tool can be provided with additional drive axes. For example, drive axes for translation and rotation of the work bench (1) on a horizontal plane, said additional drive axes being able to be calibrated by the method of the invention.

Without being limited to it, the drive axes can be ball screws, rack and pinion gears, linear motors, or other similar drive systems commonly used in the machine tool sector.

Additionally, the head (5) is spatially orientable with respect to the ram (4), and said orientation will depend on the head configuration and the rotation axes thereof. Said axes could also be the object of calibration.

The drive axes of the machine tool are controlled by means of measuring means specific to the machine that determine the position of the drive axes in the work volume of the machine. The position of the axes is measured in machine coordinates (X, Y, Z) able to be interpreted by the control unit (CNC) of the machine.

The measuring means of the machine are capture rules, one for each drive axis of the machine, such that by means of said capture rules the relative movement of the column (3) and the ram (4) with respect to the work bench (1) are controlled, thus being able to determine the spatial location of the head (5) in the work volume of the machine at all times by means of the position readings provided by said capture rules. In any case, the measuring means could be encoders or any other measuring system that allows the position of the machine axes to be determined.

In order to carry out the calibration method of the invention, a position gauge (6) that is arranged in the head (5) and a calibration tool (7) with reference patterns (8) are used.

The calibration tool (7) with the reference patterns (8) can be arranged on the bench (1) within the work volume of the machine, while, by using the drive axes, the head (5) is movable along the work volume of the machine, and therefore the position gauge (6) can be arranged in any spatial position within the work volume of the machine.

The position gauge (6) is located in the portion of the head (5) wherein the tool is generally arranged during the machining operations of the machine. Thus, during the calibration method, the position gauge (6) is arranged in the head (5), and during normal use of the machine during machining, the work tool is arranged in the head (5). In this way, the position gauge (6) enables values of the spatial position wherein the tool is generally located to be obtained, which is precisely the position that needs to be precisely calibrated to obtain machined parts with lower tolerances.

The reference patterns (8) are geometric shapes the relative position of which in the calibration tool (7) is known. Thus, the relative position of the patterns (8) with respect to the tool (7) is previously calibrated in a high-range metrology machine. (For example, a "*CMM*" coordinates measuring machine). That is, the arrangement and orientation of the patterns (8) in the tool (7) is accurately known.

Preferably the reference patterns (8) are spheres, although they can be other geometric shapes such as cylinders, cones, vertices, or the like. In the case that the reference patterns (8) are spheres, the centre of the sphere is used as reference during the calibration method to precisely determine the spatial location of the sphere.

Preferably the reference patterns (8) are distributed along a main direction of the calibration tool (7). Additionally, the reference patterns (8) may be distributed along two or three directions, to give two-dimensional or three-dimensional information and to be able to cover the entire work volume of the machine.

As shown in Figure 1, the calibration tool comprises a vertical support (7.1) and a bar (7.2) wherein the reference patterns (8) are arranged, said bar (7.1) extending according to the main direction. The bar (7.2) is arranged at one end of the vertical support (7.1), while at the opposite end the bar (7.2) is attached to the bench (1).

Preferably, the calibration tool (7) has a vertical rotation axis (r) to rotate the bar (7.2) which has the reference patterns (8), and therefore be able to rotate the main direction of the calibration tool (7) 360°, thus being able to cover the entire work volume of the machine. Thus, the bar (7.2) can rotate on the vertical support (7.1).

The position gauge (6) may be a probe, or a gauge with three linear movement sensors with an orthogonal arrangement between each other, as described in document EP3101384B1 which is incorporated into the description by way of reference. When the reference patterns (8) of the calibration tool (7) are spheres, the gauge with the three linear movement sensors is used to determine the centre of each of the spheres.

The method for calibrating the geometric errors of the machine tool comprises two steps. A first step wherein by using information from a photogrammetry system, the position gauge (6) automatically moves to an approximate spatial position wherein it is estimated that one of the reference patterns of the calibration tool (7) is located, and a second step wherein the position gauge (6) references the actual spatial position of the reference patterns (8) of the calibration tool (7) to correct the geometric errors of the machine tool. In this way, the time used in the first step is considerably reduced with respect to other calibration techniques, such as the one described in document EP3101384B1, wherein an operator must manually search for the estimated spatial position of each one of the reference patterns of the tool.

Accordingly, the calibration method comprises a first step wherein first reference markers (9) are arranged in the calibration tool (7) which has the reference patterns (8) and second reference markers (10) in the machine tool, in the case of the preferred embodiment shown in Figure 1, said second reference markers (10) are arranged in the head (5) which has the position gauge (6).

The reference markers (9,10) may be coded stickers and/or hemispheres, as those shown in Figure 1, and/or reference crossheads, pattern bars, or even geometric entities of the tool (7) itself or the head (5), in other words, not elements that are arranged in the tool, but are an intrinsic part of the tool (7) itself.

In the first step, the relative position between the first reference markers (9) and the reference patterns (8) is determined. The relative position between the second reference markers (10) and the position gauge (6) is further determined. In this way, the relative position between the markers (9,10) and the patterns (8) and the gauge (6) is known. For this calibration, a dimensional metrology technique commonly known in machine tools may be used, without the technique used being limiting to the invention, such as, for example, non-contact techniques by means of laser, optical, or inductive means, 3D digitisation, or photogrammetry, or contact techniques by means of probes.

In this way, the arrangement of the reference markers (9,10) in the tool (7) and in the head (5) may be arbitrary, without having to be arranged in a specific position. However, although this determination of the relative positions is recommended, it is not absolutely necessary, since if the markers (9,10) are arranged in a specific and known position with respect to the tool (7) and the head (5) respectively, it would not be necessary to establish this relationship between the markers and the respective tool and head, since in this case the markers would directly reference the element the spatial position of which is to be known. For example, the first markers (9) may be directly arranged in the reference patterns (8) to be measured, or in a known position with respect to said position to be measured. The same happens with the gauge (6), the second markers (10) being able to be directly arranged in a known position of the gauge (6), the geometric shape of the gauge being known.

In a second step, vision means (11) are used to capture at least one image of the work volume of the machine, such that by means of the vision means (11) the work volume of the machine wherein the first reference markers (9) of the calibration tool (7) and the second reference markers (10) are found can be observed.

It is preferable to capture more than one image of the work volume of the machine from different orientations, such that more spatial information is available from the markers (9,10) to improve the precision of the calibration. Thus, to apply 3D reconstruction photogrammetric techniques, it is preferable to have two-dimensional information from each marker (9,10) of two or more images captured from different orientations.

The vision means (11) may be a movable camera, to be able to capture several images of the work volume of the machine from different orientations, or more than one fixed camera, to be able to capture with each fixed camera an image of the work volume of the machine from a fixed orientation different from the image captured with the other fixed camera(s).

In a third step, the image or images captured by the vision means (11) are used to determine the spatial position of each one of the first and second reference markers (9,10) in the work volume of the machine. The spatial positions of the markers (9,10) are determined by using photogrammetry algorithms that enable the two-dimensional information of the images to be transformed into three-dimensional information.

The greater the number of images captured, the better the precision in determining the spatial position of the markers will be. Therefore, to improve the precision in determining the spatial positions, it is preferable to capture two or more images of the work volume of the machine, either with the movable camera from various orientations, or with the fixed cameras from various orientations.

The information on the spatial position of the markers (9,10) is sent to the CNC control unit of the machine tool which controls the driving of the machine axes. Said spatial information is encoded in machine coordinates.

In a fourth step, the approximate spatial positions of the reference patterns (8) of the calibration tool (7) are determined according to the spatial position of each of the first and second reference markers (9,10) determined in the previous step by means of the photogrammetric techniques. This determination of the spatial position wherein the patterns (8) are estimated to be within the work volume of the machine is achieved since the relative position between the first reference markers (9) and the reference patterns (8), as well as the relative position between the second reference markers (10) and the position gauge (6), is known, as described in the first step.

In a fifth step, the head (5) moves with the position gauge (6) to one of the reference patterns (8) of the calibration tool (7) according to the approximate spatial positions of the reference patterns (8) determined in the last step. To do this, the control unit of the machine tool commands the drive axes to move the head (5) with the gauge (6) to the approximate spatial position of one of the reference patterns (8) that is encoded in machine coordinates.

In a sixth step, the head (5) moves with the gauge (6) through the reference patterns (8) and the actual spatial positions of the reference patterns (8) are determined in machine coordinates by means of the gauge (6). The actual spatial positions of the reference patterns (8) of the calibration tool (7) are precisely determined by means of the position gauge (6).

Finally, in a seventh step, the geometric errors of the machine tool are corrected by processing and comparing the approximate spatial positions of the reference patterns (8) with their respective actual positions measured in machine coordinates by means of the CNC control unit of the machine.

The correction of the geometric errors of the machine tool is carried out by precisely referencing the reference patterns (8) of the calibration tool (7) by means of the gauge (6). To do this, as indicated above in the fifth step, the head (5) moves the gauge (6) and arranges it in one of the reference patterns (8) according to the approximate spatial position of said pattern (8), which is determined in the third and fourth steps by means of photogrammetry algorithms by using the reference markers (9,10). The relationship between the first reference markers (9) and the patterns (8), and between the second reference markers (10) and the gauge (6), is known since said relationship has been determined in the first step of the method.

Said approximate spatial position wherein the pattern (8) is expected to be found is encoded according to (X, Y, Z) coordinates of the drive axes of the machine. With the gauge (6) arranged in the approximate spatial position, wherein the pattern (8) is expected to be found, the actual spatial position of the pattern (8) is then determined, and said actual spatial position, which is accurately determined by means of the gauge (6), it is equally coded according to (X, Y, Z) coordinates of the drive axes of the machine. Accordingly, the vision means (11) enable the gauge (6) to approach the reference patterns (8), such that the correction of geometric errors is carried out by comparing data from the position measurements of the patterns (8) carried out with the gauge (6) with the calibrated values of the patterns (8), and by processing all these data, the errors in the entire work volume of the machine are estimated.

The way in which the position gauge (6) determines precisely the actual spatial position of the pattern (8) is known, and therefore will not be described in further detail. See for example document EP3101384B1 which is incorporated as reference. For example, as described in document EP3101384B1, when the gauge is three linear movement sensors with an orthogonal arrangement between each other, and the reference patterns (8) are spheres, the position gauge (6) is used to precisely reference the actual spatial position of the centre of the sphere.

When the actual spatial position of one of the patterns (8) has been referenced, the head (5) moves the gauge (6) to another of the patterns (8), and the process of the fourth and fifth steps is repeated. This process can be repeated for each one of the patterns (8) of the calibration tool (7).

To improve the correction of the geometric errors of the drive axes, it is preferable to calibrate as many spatial positions as possible within the work volume of the machine. Accordingly, after having carried out the fourth, fifth and sixth steps for each one of the patterns (8) of the tool (7), the calibration tool (7) is positioned in a new position and/or orientation within the work volume of the machine, and the fourth, fifth and sixth steps are repeated for each one of the patterns (8) of the tool (7).

The new position and/or orientation can be obtained by manually arranging the tool (7) in another place on the work bench (1). However, preferably, the new orientation is obtained by automatically rotating the bar (7.2) of the tool (7) about the vertical rotation axis (r) thereof. The rotation of the bar (7.2) is carried out according to a controlled rotation, such that said rotation being known, the approximate spatial positions of the patterns (8) after the rotation are also known, not being necessary to repeat the third step that uses the vision means (11) to determine the approach.

In case of obtaining the new position and/or orientation manually, the third step should be repeated to determine by means of photogrammetry the approximate spatial position of the patterns (8) based on the information of the reference markers (9,10).

Steps four, five and six can be repeated for more than one new orientation of the tool (7).

After having referenced all the reference patterns (8) of the calibration tool (7), all the measurements carried out are processed and the geometric errors of the machine tool are calculated by comparing the approximate spatial positions of the patterns with the actual spatial positions.

## Claims

1. A method for calibrating the geometric errors of a machine tool with a head (5) able to move in the workload of the machine, which uses a position gauge (6) being arranged in the head (5) and a calibration tool (7) with reference patterns (8) being arranged in the work volume of the machine, the spatial position of the reference patterns (8) being determined by means of the position gauge (6) to automatically correct the geometric errors of the machine tool, **characterised in that** the method comprises the steps of:
• using first reference markers (9) being arranged in the calibration tool (7) and using second reference markers (10) being arranged in the machine tool;
• determining the relative position between the first reference markers (9) and the reference patterns (8), and the relative position between the second reference markers (10) and the position gauge (6);
• using vision means (11) comprising a movable camera or more than one fixed camera for capturing at least one image of the work volume of the machine, the first reference markers (9) of the calibration tool (7) and the second reference markers (10) being observable in the work volume of the machine;
• determining a spatial position for each one of the first and second reference markers (9, 10) in the work volume of the machine, using at least one image captured by the vision means (11);
• determining the approximate spatial positions of the reference patterns (8) of the calibration tool (7) according to the spatial position of each one of the first and second reference markers (9, 10) determined in the preceding step;
• automatically moving the head (5) with the position gauge (6) to one of the reference patterns (8) of the calibration tool (7) according to the approximate spatial positions of the reference patterns (8) determined in the preceding step;
• determining the actual spatial positions of the reference patterns (8) by means of the position gauge (6),
• automatically correcting the geometric errors of the machine tool by processing the information of the approximate and actual spatial positions of the reference patterns (8).

2. The method according to the preceding claim, wherein more than one image of the work volume of the machine is captured, and wherein each image is captured from a different orientation.

3. The method according to the preceding claim, wherein the vision means (11) are a movable camera which captures several images of the work volume of the machine from different orientations.

4. The method according to claim 2, wherein the vision means (11) are more than one fixed camera, and each fixed camera captures an image of the work volume of the machine from a fixed and different orientation.

5. The method according to any one of the preceding claims, wherein the relative position is determined by using a dimensional metrology technique.

6. The method according to any one of the preceding claims, wherein the calibration tool (7) used comprises a bar (7.2) wherein the reference patterns (8) are arranged, said bar (7.2) having a vertical rotation axis (r), such that after determining the actual spatial positions of the reference patterns (8) by means of the position gauge (6), the bar (7.2) is rotated according to a controlled rotation about the vertical rotation axis (r), leaving the bar (7.2) arranged in a new orientation, and then new approximate and actual spatial positions of the reference patterns (8) are determined again according to the new orientation.

7. The method according to any one of the preceding claims, wherein the reference patterns (8) of the tool (7) are geometric shapes the relative position of which in the calibration tool (7) is known and has been previously calibrated in a high-range metrology machine.

8. The method according to the preceding claim, wherein the geometric shapes are spheres.

9. The method according to any one of the preceding claims, wherein the spatial positions of the reference patterns (8) are encoded in machine coordinates by using measuring means of the position of the drive axes of the machine tool.

10. The method according to the preceding claim, wherein the measuring means are optical rulers or encoders that determine the position of one of the drive axes of the machine.

## Patentansprüche

1. Verfahren zur Kalibrierung der geometrischen Fehler einer Werkzeugmaschine mit einem Kopf (5), der fähig ist, sich in dem Arbeitsvolumen der Maschine zu bewegen, das einen Positionsanzeiger (6), der in dem Kopf (5) eingerichtet ist, und ein Eichwerkzeug (7) verwendet, wobei Bezugsmuster (8) in dem Arbeitsvolumen der Maschine eingerichtet sind, wobei die räumliche Position der Bezugsmuster (8) mit Hilfe des Positionsanzeigers (6) bestimmt wird, um die geometrischen Fehler des Maschinenwerkzeugs automatisch zu korrigieren, **dadurch gekennzeichnet, dass** das Verfahren die folgenden Schritte aufweist:
- Verwenden erster Bezugsmarkierungen (9), die in dem Eichwerkzeug (7) eingerichtet sind, und Verwenden zweiter Bezugsmarkierungen (10), die in dem Maschinenwerkzeug eingerichtet sind;
- Bestimmen der relativen Position zwischen den ersten Bezugsmarkierungen (9) und den Bezugsmustern (8) und der relativen Position zwischen den zweiten Bezugsmarkierungen (10) und dem Positionsanzeiger (6);
- Verwenden von Sichteinrichtungen (11), die eine bewegliche Kamera oder mehr als eine feste Kamera zum Aufnehmen wenigstens eines Bilds des Arbeitsvolumens der Maschine aufweisen, wobei die ersten Bezugsmarkierungen (9) des Eichwerkzeugs (7) und die zweiten Bezugsmarkierungen (10) in dem Arbeitsvolumen der Maschine beobachtbar sind;
- Bestimmen einer räumlichen Position für jede der ersten und zweiten Bezugsmarkierungen (9, 10) in dem Arbeitsvolumen der Maschine unter Verwendung wenigstens eines von den Sichteinrichtungen (11) aufgenommenen Bilds;
- Bestimmen der ungefähren räumlichen Positionen der Bezugsmuster (8) des Eichwerkzeugs (7) gemäß der räumlichen Position jeder der in dem vorhergehenden Schritt bestimmten ersten und zweiten Bezugsmarkierungen (9, 10);
- automatisches Bewegen des Kopfs (5) mit dem Positionsanzeiger (6) zu einem der Bezugsmuster (8) des Eichwerkzeugs (7) gemäß den in dem vorhergehenden Schritt bestimmten ungefähren räumlichen Positionen der Bezugsmuster (8);
- Bestimmen der tatsächlichen räumlichen Positionen der Bezugsmuster (8) mit Hilfe des Positionsanzeigers (6);
- automatische Korrigieren der geometrischen Fehler des Maschinenwerkzeugs durch Verarbeiten der Informationen der ungefähren und tatsächlichen räumlichen Positionen der Bezugsmuster (8).

2. Verfahren nach dem vorhergehenden Anspruch, wobei mehr als ein Bild des Arbeitsvolumens der Maschine aufgenommen wird, und wobei jedes Bild aus einer unterschiedlichen Orientierung aufgenommen wird.

3. Verfahren nach dem vorhergehenden Anspruch, wobei die Sichteinrichtungen (11) eine bewegliche Kamera sind, die mehrere Bilder des Arbeitsvolumens der Maschine aus unterschiedlichen Orientierungen aufnimmt.

4. Verfahren nach Anspruch 2, wobei die Sichteinrichtungen (11) mehr als eine feste Kamera sind, und wobei jede feste Kamera ein Bild des Arbeitsvolumens der Maschine aus einer festen und unterschiedlichen Orientierung aufnimmt.

5. Verfahren nach einem der vorhergehenden Ansprüche, wobei die relative Position unter Verwendung einer dimensionalen Messtechnik bestimmt wird.

6. Verfahren nach einem der vorhergehenden Ansprüche, wobei das verwendeter Eichwerkzeug (7) eine Stange (7.2) aufweist, wobei die Bezugsmuster (8) eingerichtet wurden, wobei die Stange (7.2) eine vertikale Drehachse (r) hat, so dass die Stange (7.2) nach dem Bestimmen der tatsächlichen räumlichen Positionen der Bezugsmuster (8) mit Hilfe des Positionsanzeigers (6) gemäß einer gesteuerten Drehung um die vertikale Drehachse (r) gedreht wird, wobei die Stange (7.2) in einer neuen Orientierung eingerichtet bleibt und dann gemäß der neuen Orientierung erneut neue ungefähre und tatsächliche räumliche Positionen der Bezugsmuster (8) bestimmt werden.

7. Verfahren nach einem der vorhergehenden Ansprüche, wobei die Bezugsmuster (8) des Werkzeugs (7) geometrische Formen sind, deren relative Position in dem Eichwerkzeug (7) bekannt ist und die vorher in einer hochwertigen Messtechnikmaschine geeicht wurden.

8. Verfahren nach dem vorhergehenden Anspruch, wobei die geometrischen Formen Kugeln sind.

9. Verfahren nach einem der vorhergehenden Ansprüche, wobei die räumlichen Positionen der Bezugsmuster (8) unter Verwendung von Messeinrichtungen der Position der Antriebsachsen des Maschinenwerkzeugs in Maschinenkoordinaten kodiert werden.

10. Verfahren nach dem vorhergehenden Anspruch, wobei die Messeinrichtungen optische Lineale oder Kodierer sind, welche die Position einer der Antriebsachsen der Maschine bestimmen.

## Revendications

1. Procédé d'étalonnage des erreurs géométriques d'une machine-outil avec une tête (5) apte à se déplacer dans la charge de travail de la machine, qui utilise une jauge de position (6) qui est agencée dans la tête (5) et un outil d'étalonnage (7) avec des motifs de référence (8) qui sont agencés dans le volume de travail de la machine, la position spatiale des motifs de référence (8) étant déterminée au moyen de la jauge de position (6) pour corriger automatiquement les erreurs géométriques de la machine-outil, **caractérisé en ce que** le procédé comprend les étapes consistant à :
- utiliser des premiers marqueurs de référence (9) qui sont agencés dans l'outil d'étalonnage (7) et utiliser des deuxièmes marqueurs de référence (10) qui sont agencés dans la machine-outil ;
- déterminer la position relative entre les premiers marqueurs de référence (9) et les motifs de référence (8), et la position relative entre les deuxièmes marqueurs de référence (10) et la jauge de position (6) ;
- utiliser des moyens de vision (11) comprenant une caméra mobile ou plus d'une caméra fixée pour capturer au moins une image du volume de travail de la machine, les premiers marqueurs de référence (9) de l'outil d'étalonnage (7) et les deuxièmes marqueurs de référence (10) étant observables dans le volume de travail de la machine ;
- déterminer une position spatiale pour chacun des premier et deuxième marqueurs de référence (9, 10) dans le volume de travail de la machine, utiliser au moins une image capturée par les moyens de vision (11) ;
- déterminer les positions spatiales approximatives des motifs de référence (8) de l'outil d'étalonnage (7) selon la position spatiale de chacun des premier et deuxième marqueurs de référence (9, 10) déterminée dans l'étape précédente ;
- déplacer automatiquement la tête (5) avec la jauge de position (6) vers un des motifs de référence (8) de l'outil d'étalonnage (7) selon les positions spatiales approximatives des motifs de référence (8) déterminées dans l'étape précédente ;
- déterminer les positions spatiales réelles des motifs de référence (8) au moyen de la jauge de position (6),
- corriger automatiquement les erreurs géométriques de la machine-outil par traitement des informations des positions spatiales approximatives et réelles des motifs de référence (8).

2. Procédé selon la revendication précédente, dans lequel plus d'une image du volume de travail de la machine est capturée, et dans lequel chaque image est capturée à partir d'une orientation différente.

3. Procédé selon la revendication précédente, dans lequel les moyens de vision (11) sont une caméra mobile qui capture plusieurs images du volume de travail de la machine à partir d'orientations différentes.

4. Procédé selon la revendication 2, dans lequel les moyens de visions (11) sont plus d'une caméra fixe, et chaque caméra fixe capture une image du volume de travail de la machine à partir d'une orientation fixe et différente.

5. Procédé selon l'une quelconque des revendications précédentes, dans lequel la position relative est déterminée par utilisation d'une technique de métrologie dimensionnelle.

6. Procédé selon l'une quelconque des revendications précédentes, dans lequel l'outil d'étalonnage (7) utilisé comprend une barre (7.2), dans lequel les motifs de référence (8) sont agencés, ladite barre (7.2) étant un axe de rotation vertical (r) de sorte qu'après la détermination des positions spatiales réelles des motifs de référence (8) au moyen de la jauge de position (6), la barre (7.2) soit tournée selon une rotation commandée autour de l'axe de rotation vertical (r), laissant la barre (7.2) agencée dans une nouvelle orientation, et ensuite de nouvelles positions spatiales approximatives et réelles des motifs de référence (8) sont de nouveau déterminées selon la nouvelle orientation.

7. Procédé selon l'une quelconque des revendications précédentes, dans lequel les motifs de référence (8) de l'outil (7) sont des formes géométriques, dont la position relative dans l'outil d'étalonnage (7) est connue et a été précédemment étalonnée dans une machine de métrologie à grande portée.

8. Procédé selon la revendication précédente, dans lequel les formes géométriques sont des sphères.

9. Procédé selon l'une quelconque des revendications précédentes, dans lequel les positions spatiales des motifs de référence (8) sont codées en coordonnées de machine par utilisation de moyens de mesure de la position des axes d'entraînement de la machine-outil.

10. Procédé selon la revendication précédente, dans lequel les moyens de mesure sont des règles optiques ou des codeurs qui déterminent la position d'un des axes d'entraînement de la machine.
